# FASCICULE DE BREVET EUROPEEN

(11) **EP 2 744 698 B1**
(45) Date de publication et mention de la délivrance du brevet: **13.01.2016**
(21) Numéro de dépôt: 12744072.5
(22) Date de dépôt: 10.07.2012
(51) Int. Cl.: B62D 25/00, B62D 25/20, B62D 21/06, B62D 27/00

(54) **CAISSE DE VEHICULE AUTOMOBILE COMPRENANT UN DISPOSITIF DE RAIDISSEMENT**
KRAFTFAHRZEUGKAROSSERIE MIT EINER VERSTEIFUNGSVORRICHTUNG
MOTOR VEHICLE BODY SHELL COMPRISING A STIFFENING DEVICE

(30) Priorité: 17.08.2011 FR 1157374
(43) Date de publication de la demande: 25.06.2014
(73) Titulaire: Peugeot Citroën Automobiles SA, 78140 Vélizy Villacoublay (FR)
(72) Inventeur: ROBERT, Cédric, F-70400 Héricourt (FR); KAUFFMANN, Michel, F-25460 Etupes (FR); FONFREDE, Stéphane, F-90000 Belfort (FR); BERGER, Patrick, F-25200 Montbéliard (FR)
(86) Numéro de dépôt international: PCT/FR2012/051626
(87) Numéro de publication internationale: WO 2013/024219

(56) Documents cités:
- EP-A2- 1 029 773
- JP-A- 8 175 425
- JP-A- 2010 036 810
- US-A- 4 892 350
- US-A1- 2003 164 623

## Description

L'invention a trait au domaine des véhicules automobiles, et plus précisément l'invention concerne un système de raidissement de la caisse du véhicule.

La caisse du véhicule constitue son ossature, et supporte un ensemble d'éléments qui sont rapportés dessus par la suite, comme le moteur, le système de direction, les portières, la carrosserie, les sièges, le passage des faisceaux électriques de l'habitacle ou encore le garnissage.

C'est la caisse qui principalement confère au véhicule sa rigidité et qui définit sa résistance aux chocs.

La résistance aux chocs des véhicules est une préoccupation de premier plan dans la construction des véhicules automobiles, aussi bien au niveau national qu'au niveau international. Par exemple, l'organisme Euro NCAP propose des tests de crash par la mise en oeuvre de protocoles, pour vérifier que les véhicules répondent aux exigences législatives.

Les chocs survenant entre véhicules sont principalement de deux types : soit de type frontal, soit de type latéral.

Dans le cas des chocs latéraux, bien souvent la caisse se déforme du fait de la déformation d'un montant latéral, sensiblement vertical, de la caisse, appelé pied milieu, placé entre les rangées de sièges avant et arrière du véhicule. En cas de choc latéral, le pied milieu absorbe une grande partie de l'énergie du choc, et se plie. L'intégrité de la caisse du véhicule n'est alors plus garantie, de même que la sécurité des passagers du véhicule.

Le document JP 8-175425 propose de placer un élément de renfort, formant une pente douce, fixé d'une part sur un longeron de bas de caisse et d'autre part sur le plancher du véhicule. Une traverse comprend une extrémité fixée sur l'élément de renfort et une extrémité fixée sur un support de siège, le support de siège s'étendant parallèlement au longeron. La traverse forme ainsi entretoise entre le longeron de bas de caisse et le support de siège.

Une telle solution est cependant incomplète.

Un example de caisse suivant les caractéristiques du préambule de la revendication 1, est considéré le document EP-A-1029773.

D'une part, bien que l'entretoise limite les déformations du longeron, l'élément de renfort doit absorber l'ensemble des déformations en cas de choc latéral pour les reporter sur l'entretoise. Il en résulte qu'en cas de choc latéral de forte énergie, l'élément de renfort ne peut pas absorber toute l'énergie. Il en résulte en outre la nécessité de surdimensionner la pièce de renfort, augmentant les coûts de fabrication.

D'autre part, il est courant de faire passer dans l'habitacle, le long du longeron de bas de caisse, des éléments comme des faisceaux électriques. La présence de l'élément de renfort empêche de faire passer au plus près du longeron ces éléments, de sorte que l'encombrement à l'intérieur du véhicule est augmenté.

Il existe donc un besoin de rigidifier la caisse du véhicule, en particulier lors de chocs latéraux.

Un premier objectif est par conséquent d'augmenter la résistance aux chocs, notamment aux chocs latéraux, de la caisse des véhicules automobiles.

Un deuxième objectif est de proposer un dispositif de raidissement limitant les déformations du pied milieu de la caisse.

Un troisième objectif est de proposer un dispositif de raidissement diminuant les coûts de fabrication.

Un quatrième objectif est de proposer un dispositif de raidissement diminuant l'encombrement.

Un cinquième objectif est de proposer un dispositif de raidissement diminuant le poids de la caisse du véhicule.

A cet effet, il est proposé une caisse de véhicule automobile comprenant une traverse et un longeron, la caisse comprenant en outre un dispositif de raidissement. Le longeron est en butée contre une portion extrême de la traverse, la traverse étant fixée sur un plancher de la caisse, et en ce que le dispositif de raidissement comprend une portion supérieure fixée sur le longeron et une portion inférieure fixée sur la traverse, la portion supérieure et la portion inférieure étant reliées l'une à l'autre par une portion intermédiaire raidie.

Par « raidie », on désigne ici la capacité de la portion intermédiaire à ne pas se déformer sous l'action des contraintes engendrées par un choc latéral sur la caisse du véhicule, de manière à limiter le déplacement du longeron vers la traverse.

Diverses caractéristiques supplémentaires peuvent être prévues, seules ou en combinaison :
- la portion extrême de la traverse est en butée contre une partie basse du longeron et la portion supérieure du dispositif de raidissement est fixée sur une partie haute du longeron.
- la portion extrême de la traverse est munie d'un plot présentant une face supérieure et en ce que la portion supérieure est fixée sur une face latérale du longeron et la portion inférieure fixée sur la face supérieure du plot de la traverse.
- la face supérieure du plot affleure la face latérale du longeron.
- la portion intermédiaire du dispositif comprend deux sections reliées par un congé, formant un espace libre avec le longeron et la face supérieure du plot.
- la portion intermédiaire du dispositif de raidissement comprend des nervures s'étendant de la portion supérieure vers la portion inférieure.
- le plot comprend une face supérieure avant affleurant le longeron et une face supérieure arrière, parallèle à la face supérieure avant, les deux faces supérieures étant reliées par une face de jonction à distance du longeron, la portion inférieure du dispositif étant fixée sur la face supérieure arrière du plot.
- la portion intermédiaire du dispositif comprend une section horizontale s'étendant depuis la portion supérieure et reliée à la portion inférieure par une section de jonction, une pièce de renfort étant fixée sur la section horizontale.
- la caisse comprend un pied milieu solidaire du longeron.
- la portion supérieure du dispositif de raidissement comprend des moyens pour la fixation d'un enrouleur d'une ceinture de sécurité.

D'autres objets et avantages de l'invention apparaîtront à la lumière de la description de modes préférés de réalisation, faite ci-après en référence aux dessins annexés dans lesquels :
- la figure 1 est une vue de face illustrant des éléments d'une caisse automobile et comprenant un dispositif de raidissement selon un premier mode de réalisation ;
- la figure 2 est une vue en coupe des éléments de la figure 1 selon la ligne de coupe II-II ;
- la figure 3 est une vue en perspective des éléments de la figure 1 ;
- la figure 4 est une vue de côté du dispositif de raidissement de la figure 1 ;
- la figure 5 est une vue en perspective du dispositif de la figure 4 ;
- la figure 6 est une vue de face illustrant des éléments d'une caisse automobile et comprenant un dispositif de raidissement selon un deuxième mode de réalisation ;
- la figure 7 est une vue en perspective des éléments de la figure 6;
- la figure 8 est une vue de côté du dispositif de raidissement et d'un plot d'assise de la figure 6 ;
- la figure 9 est une vue en perspective du dispositif de la figure 8.

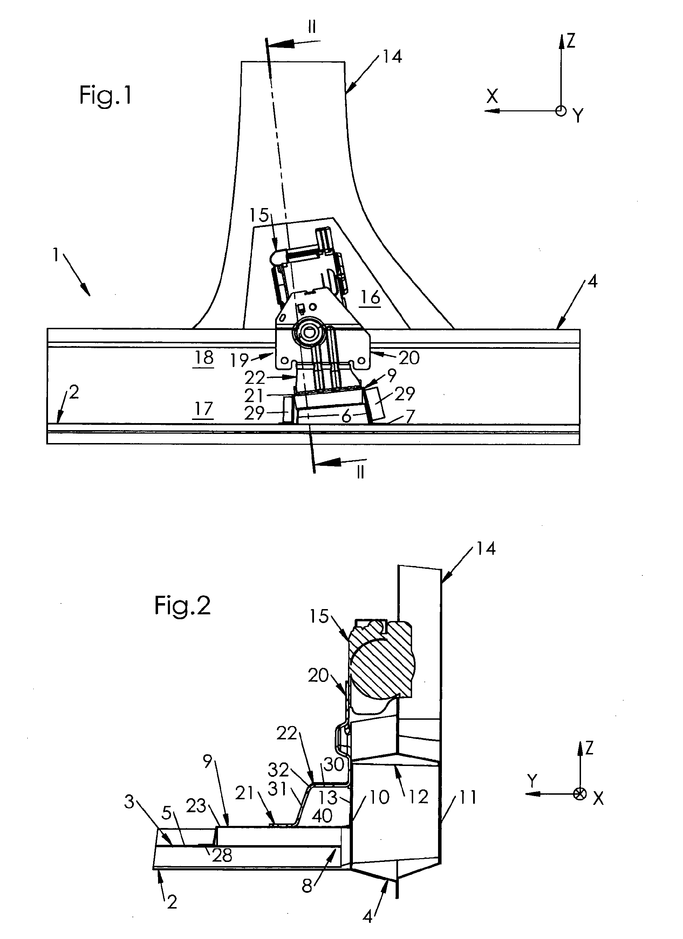

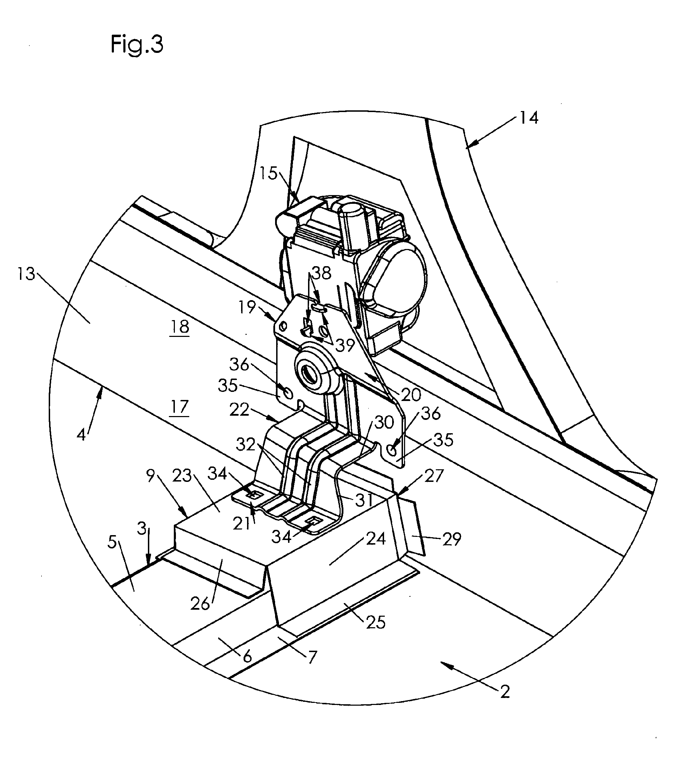

Sur les figures 1 à 3 sont représentés des éléments d'une caisse 1 d'un véhicule automobile. La caisse 1 définit un espace intérieur, appelé habitacle, dans lequel le conducteur et les passagers du véhicule peuvent s'installer.

On définit par rapport à la caisse 1 du véhicule un repère orthogonal direct comprenant un axe longitudinal X, parallèle au sol et confondu avec la direction générale de déplacement du véhicule ; un axe transversal Y, également parallèle au sol et perpendiculaire à l'axe X ; un axe vertical Z, perpendiculaire au plan XY horizontal (c'est-à-dire perpendiculaire au sol).

Plus précisément, la caisse 1 comprend un plancher 2, sensiblement parallèle au plan XY horizontal, sur lequel sont fixés une traverse 3, s'étendant sensiblement parallèlement à la direction Y transversale et un longeron 4, s'étendant sensiblement parallèlement à la direction X longitudinale.

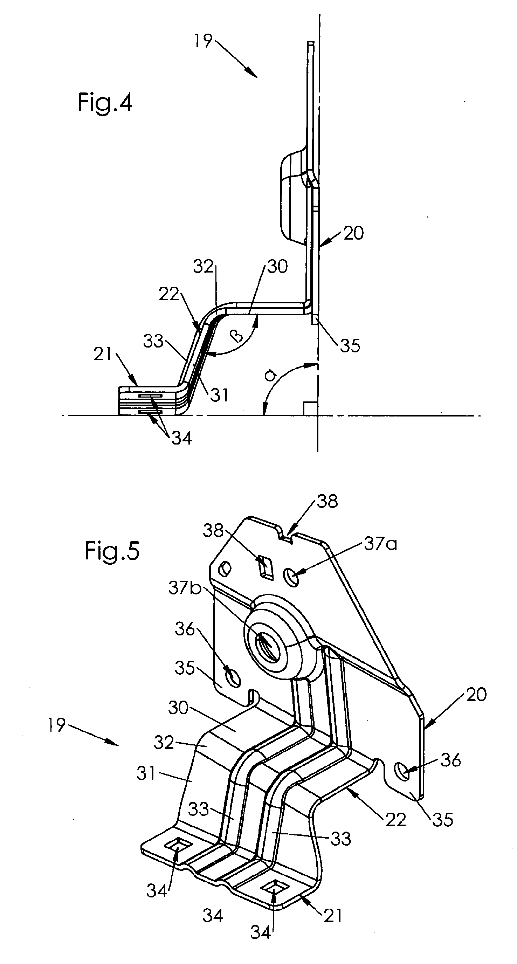

La traverse 3 présente une face 5 supérieure, tournée vers l'intérieur de la caisse 1, et deux faces 6 latérales prolongées par des pattes 7, permettant la fixation de la traverse 3 sur le plancher 2, par exemple par soudure. Selon le mode de réalisation préféré, la face 5 supérieure de la traverse 3 s'étend sensiblement dans le plan XY. En variante, illustrée sur les figures 1 à 5, la face 5 supérieure de la traverse 3 est légèrement inclinée par rapport à la direction X longitudinale. Cette inclinaison permet, comme il sera vu plus loin, d'optimiser le report des contraintes engendrées par une ceinture de sécurité.

La traverse 3 est en outre munie d'un plot 9 d'assise coiffant la partie 8 extrême de la traverse 3. Le plot 9 d'assise, qui sera décrit plus en détail plus loin, permet notamment de réaliser l'interface entre la traverse 3 et des moyens de fixation (non représentés) de l'armature de sièges du véhicule dans l'habitacle.

Le longeron 4 comprend deux parois 10, 11, appelées paroi 10 avant et paroi 11 arrière. Un renfort 12 formant entretoise est placé entre les deux parois 10, 11, notamment pour empêcher l'écrasement des parois 10, 11 l'une sur l'autre. La paroi 10 avant comprend une face 13 latérale, tournée vers l'intérieur de la caisse 1. Selon le mode de réalisation préféré, la face 13 latérale du longeron 4 est sensiblement parallèle au plan ZX.

Le longeron 4 est solidaire à un montant 14 s'étendant sensiblement parallèlement à la direction Z verticale. Le montant 14 vertical est, par exemple, le pied milieu de la caisse 1, c'est-à-dire le montant délimitant la partie avant de la partie arrière de la caisse 1.

Un enrouleur 15 de ceinture de sécurité est placé sur le pied 14 milieu. A cet effet, le pied 14 milieu comprend par exemple un logement 16 dans lequel est placé l'enrouleur 15.

En cas de choc latéral, c'est-à-dire d'un choc dont la force comprend une composante selon la direction Y transversale, le longeron 4 tend à se déformer en se déplaçant vers l'intérieur du véhicule, ce qui peut entraîner une déformation du pied 14 milieu, par rotation autour de la direction X longitudinale, affaiblissant la structure de la caisse 1 du véhicule.

Afin de limiter les déformations du longeron 4, la face 13 latérale du longeron 4 est en butée contre la traverse 3, selon la direction Y transversale. On parle alors d'équerrage. Ainsi, la face 5 supérieure de la traverse 3 est-elle adjacente à la face 13 latérale du longeron 4.

Dans l'habitacle, des faisceaux électriques doivent être placés contre le longeron 4, et sont en appui notamment sur la face 5 supérieure de la traverse 3. Pour des problèmes de dimensionnement, il est nécessaire que les faisceaux ne dépassent pas, selon la direction Z verticale, le longeron 4.

Dès lors, la butée contre le longeron 4 est réalisée sur une partie 17 basse de la face 13 latérale du longeron 4, c'est-à-dire que la face 13 latérale du longeron 4 comprend une partie 18 haute libre. Il est en effet nécessaire de conserver un espace libre au-dessus de la face 5 supérieure de la traverse 3, contre le longeron 4, pour le passage des faisceaux électriques.

Pour raidir davantage le longeron 4, et donc la caisse 1, celle-ci comprend un dispositif 19 de raidissement. Le dispositif 19 de raidissement se présente par exemple sous la forme d'une plaque découpée et pliée comprenant une portion 20 supérieure et une portion 21 inférieure. La portion 20 supérieure et la portion 21 inférieure définissent entre elles un angle α non nul, correspondant à l'angle entre la face 5 supérieure de la traverse 3 et la partie 22 haute de la face 13 latérale du longeron 4. Ainsi, selon le mode de réalisation préféré, l'angle α est sensiblement égal à 90°.

Le dispositif 19 comprend en outre une portion 22 intermédiaire raidie réalisant la jonction entre la portion 20 supérieure et la portion 21 inférieure du dispositif 19, la portion 22 intermédiaire restant toutefois à distance de la face 13 latérale du longeron 4 et de la face 5 supérieure de la traverse 3.

Par « raidie », on désigne ici la capacité de la portion intermédiaire à ne pas se déformer sous l'action des contraintes maximales, déterminées par exemple par des normes, et engendrées par un choc latéral sur la caisse du véhicule, de manière à limiter le déplacement du longeron vers l'intérieur du véhicule.

Plus précisément, la portion 22 intermédiaire raidie permet d'augmenter la résistance aux déformations du longeron, grâce à l'équerrage réalisé à la fois sur la partie 17 basse en butée sur la traverse et sur la partie 18 haute sur laquelle est fixée la portion 20 supérieure du dispositif 19 de raidissement.

Il va maintenant être décrit deux modes de réalisation du dispositif 19 de raidissement.

Selon un premier mode de réalisation, illustré aux figures 1 à 5, le plot 9 d'assise comprend une face 23 supérieure, deux faces 24 latérales prolongées par des pattes 25 latérales, une face 26 d'extrémité arrière et une extrémité 27 avant. Le plot 9 est fixé sur la portion 8 extrême de la traverse 3 de telle manière que la face supérieure du plot 9 est sensiblement parallèle à la face 5 supérieure de la traverse 3 et les pattes 25 latérales du plot 9 recouvrent et sont fixées sur les pattes 7 de la traverse 3. La face 26 arrière est également prolongée par une patte 28 arrière, en appui et fixée sur la face 5 supérieure de la traverse 3.

La portion 8 extrême du longeron 4 est légèrement écartée de la face 13 latérale de la traverse 3, tandis que l'extrémité 27 avant du plot 9 est en appui contre la face 13 latérale du longeron 4, par exemple au moyen de pattes 29 avant, de sorte que l'équerrage du longeron 4 sur la portion 8 extrême de la traverse 3 se fait par l'intermédiaire du plot d'assise 9.

La face 23 supérieure du plot 9 d'assise affleure donc la face 13 latérale du longeron 4.

La portion 22 intermédiaire comprend, selon le premier mode de réalisation, deux sections 30, 31 successives, reliées par un congé 32 décrivant un angle β par exemple de 110° environ.

La partie 22 intermédiaire est raidie, par exemple, au moyen de deux nervures 33 sensiblement parallèles, pouvant s'étendre au-delà de la partie 22 intermédiaire, par exemple depuis la portion 20 supérieure jusqu'à la portion 21 inférieure.

La portion 21 inférieure comprend des moyens pour être fixée sur la traverse 3, et plus précisément sur la face 23 supérieure du plot 9 d'assise de la traverse 3. Par exemple, la portion 21 inférieure du dispositif 19 comprend des perçages 34 pour la fixation par vissage sur la face 23 supérieure du plot 9 d'assise.

La portion 20 supérieure du dispositif 19 est fixée sur le longeron 4. Par exemple, la portion 20 supérieure du dispositif 19 est prolongée par deux languettes 35, s'étendant de part et d'autre de la portion 22 intermédiaire, et appliquée contre la partie 18 haute de la face 13 latérale du longeron 4. Chaque languette 35 est munie d'un perçage 36 permettant l'utilisation de visserie.

La portion 20 supérieure du dispositif 19 comprend également des moyens 37a pour la fixation de l'enrouleur 15 et des moyens 37b pour la fixation d'une ceinture de sécurité, de sorte que le dispositif 19 a une double fonction de support d'enrouleur 15 et de renvoi de ceinture. Par exemple, la portion 20 supérieure comprend un perçage 37a pour la fixation de l'enrouleur 15 et une ouverture 37b pour la fixation de la ceinture, par utilisation de visserie, ainsi que des ouvertures 38 pour l'encliquetage d'éléments 39 en saillie de l'enrouleur 15.

La portion 22 intermédiaire, écartée du plot 9 et du longeron 4, laisse un espace 40 libre, délimité par la section 22 intermédiaire, la face 23 supérieure du plot 9 d'assise de la traverse 3 et la partie 18 haute de la face 13 latérale du longeron 4, permettant le passage du faisceau électrique le long du longeron 4.

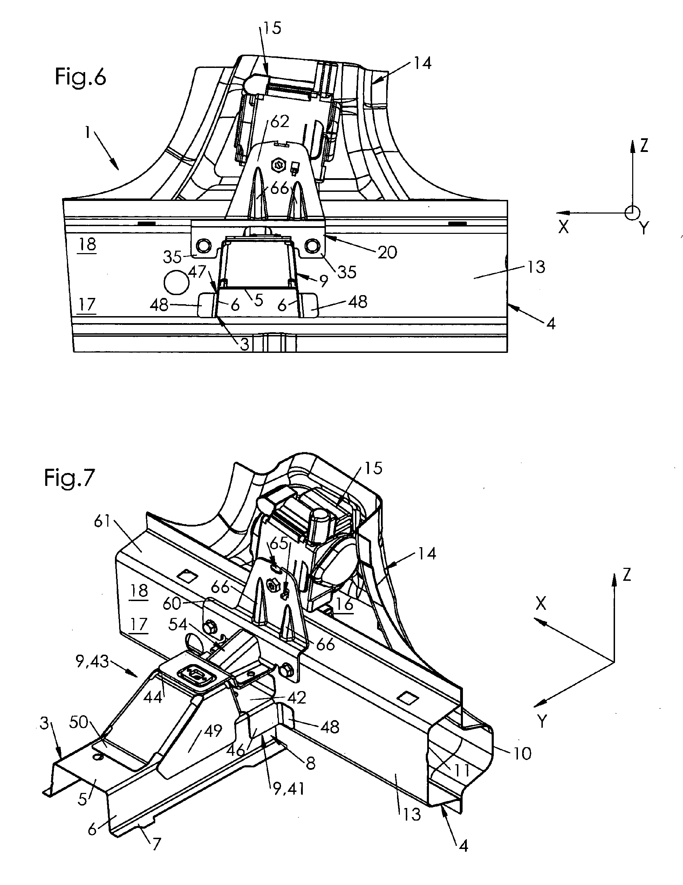

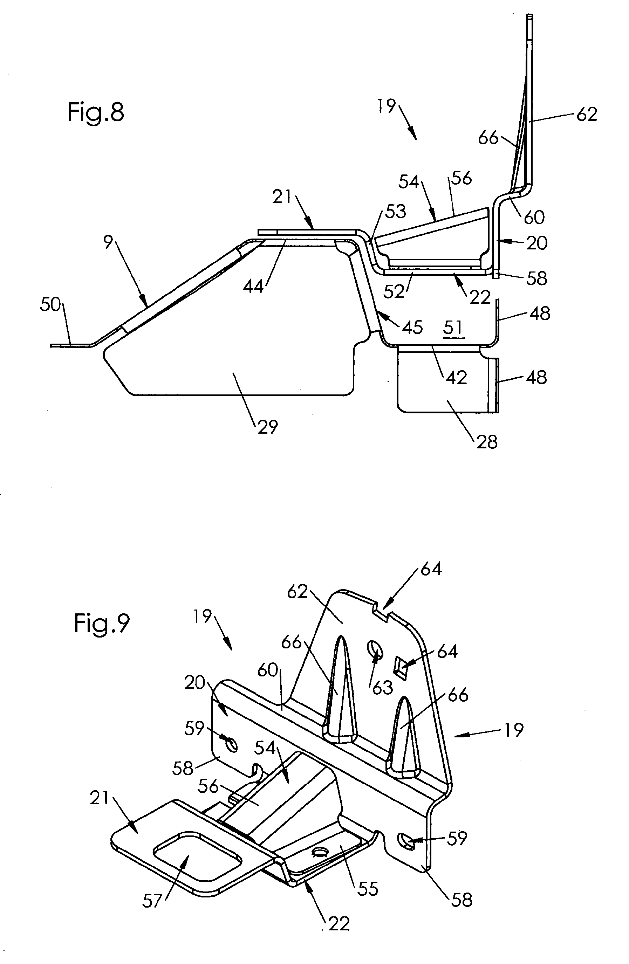

Selon un deuxième mode de réalisation, illustré en figures 6 à 9, le plot 9 d'assise forme une saillie sur la face 5 supérieure de la traverse 3.

Plus précisément, le plot 9 comprend dans une portion 41 avant une première face 42 supérieure dite avant et dans une portion 43 arrière une deuxième face 44 supérieure dite arrière, les deux faces 42, 44 supérieures étant sensiblement parallèles entre elles, mais écartées l'une de l'autre selon la direction Z verticale. Une face 45 de jonction relie la portion 41 avant à la portion 43 arrière.

La portion 41 avant comprend de plus deux faces 46 latérales, venant recouvrir les faces 6 latérales de la traverse 3, sur lesquelles elles sont fixées.

De même que dans le premier mode de réalisation, la portion 8 extrême du longeron 4 est légèrement écartée de la face 13 latérale de la traverse 3, tandis que l'extrémité 47 avant du plot 9, c'est-à-dire l'extrémité de la portion 41 avant, est en appui contre la face 13 latérale du longeron 4, par exemple au moyen de pattes 48 avant, de sorte que l'équerrage du longeron 4 sur la portion 8 extrême de la traverse 3 se fait par l'intermédiaire du plot d'assise 9.

La portion 43 arrière comprend également deux faces 49 latérales venant recouvrir les faces 6 latérales de la traverse 3, sur lesquelles elles sont fixées. La portion 43 arrière comprend en outre une patte 50 arrière, en appui et fixée sur la face supérieure de la traverse 3.

Ainsi, la face 42 supérieure avant affleure-t-elle la face 13 latérale du longeron 4, tandis que la face 44 supérieure arrière est écartée de la face 13 latérale du longeron 4, de sorte que la face 45 de jonction est à distance du longeron 4. Le plot 9 d'assise forme donc, entre la face 45 de jonction et la face 13 latérale du longeron 4 un espace 51 libre, au dessus de la face 42 supérieure avant, notamment pour le passage des faisceaux électriques.

La portion 22 intermédiaire du dispositif 19 de raidissement comprend, selon le deuxième mode de réalisation, deux sections 52, 53 successives, à savoir une première section 52 sensiblement parallèle à la portion 21 inférieure, dite section 52 horizontale, s'étendant depuis la portion 20 supérieure, et une deuxième section 53, dite section 53 de jonction, réalisant la jonction entre la section 52 horizontale et la portion 21 inférieure.

Selon le deuxième mode de réalisation, la partie 22 intermédiaire est raidie au moyen d'une pièce 54 de renfort, fixée sur la section 52 horizontale de la partie 22 intermédiaire. La pièce 54 de renfort présente deux pattes 55 pour la fixation sur la partie 22 intermédiaire et une pente 56, s'étendant entre la portion 20 supérieure du dispositif 19 de raidissement et la section 53 de jonction la portion 22 intermédiaire. La pièce 54 de renfort s'étend ainsi entre la portion 20 supérieure et la section 53 de jonction. De préférence, la pièce 54 de renfort est écartée de la portion 20 supérieure et de la section 53 de jonction.

La portion 21 inférieure comprend des moyens pour être fixée sur la traverse 3, et plus précisément sur la face 44 supérieure arrière du plot 9 d'assise de la traverse 3. Par exemple, la portion 21 inférieure du dispositif 19 comprend une ouverture 57 coaxiale avec un perçage sur la face 44 supérieure arrière du plot 9, de manière à y introduire des moyens de retenue, par exemple de type vis.

La portion 20 supérieure du dispositif 19 est fixée sur le longeron 4. Par exemple, de même que dans le premier mode de réalisation, la portion 20 supérieure du dispositif 19 est prolongée par deux languettes 58, s'étendant de part et d'autre de la portion 22 intermédiaire, et appliquées contre la partie 18 haute de la face 13 latérale du longeron 4. Chaque languette 58 est munie d'un perçage 59 permettant l'utilisation de visserie.

La portion 20 supérieure du dispositif 19 comprend également des moyens pour la fixation de l'enrouleur 15, de sorte que le dispositif 19 a une fonction de support d'enrouleur 15. Par exemple, la partie 20 supérieure est prolongée par un pli 60 formant appui sur une paroi 61 supérieure du longeron 4, le pli 60 étant à son tour prolongé par une portion 62 finale sensiblement parallèle à la portion 20 supérieure. La portion 62 finale comprend un perçage 63 pour la fixation par utilisation de visserie ainsi que des ouvertures 64 pour l'encliquetage d'éléments 65 en saillie de l'enrouleur 15.

Ainsi, le dispositif 19, notamment grâce à la portion 22 intermédiaire raidie, permet d'améliorer l'équerrage de la traverse 3 et du longeron 4, augmentant davantage la résistance aux déformations dues à un choc latéral, selon la direction Y transversale. En effet, en cas de choc, le pied 14 milieu entraine le longeron 4 en rotation autour de la direction X longitudinale. Le dispositif 19, à cheval entre la traverse 3 et le longeron 4, travaille à l'encontre de cette rotation, en transmettant les efforts selon la direction Y transversale à la traverse 3 via le plot 9 d'assise.

Plus précisément, l'appui de la patte 28, 50 arrière du plot 9 sur la face 5 supérieure de la traverse 3 ainsi que l'appui du plot 9 sur les faces 6 latérales de la traverse 3 permettent de reporter les efforts du longeron 4 sur la traverse 3.

Selon le premier mode de réalisation, la portion 22 intermédiaire travaille notamment en flexion autour de la direction X longitudinale. En particulier la flexion est localisée sur le congé 32. Les nervures 33 de raidissement limitent alors notamment les déformations dues à la flexion.

Selon le deuxième mode de réalisation, la portion 22 intermédiaire travaille notamment en compression entre la face 13 latérale du longeron 4 et la face 45 de jonction du plot 9, formant entretoise pour empêcher le longeron 4 de se déplacer vers l'intérieur de l'habitacle par rotation autour de la direction X longitudinale. La pièce 54 de renfort permet de renforcer l'effet d'entretoise, la portion 20 supérieure du dispositif 19, fixée sur le longeron 4, venant en butée contre la pièce 54 de renfort, qui vient alors à son tour en butée contre la face 45 de jonction de la portion 22 intermédiaire du dispositif 19, laquelle s'appuie sur le plot 9.

Avantageusement, selon le deuxième mode de réalisation, des rainures 66 en saillie sont placées entre le pli 60 et la portion finale 62, de sorte que les déformations du pied 14 milieu entraînant le rabattement de la portion finale 62 sur le pli 60 sont empêchées.

Le report des contraintes dues à un choc latéral vers la traverse 3 s'en trouve augmenté grâce à la fixation du dispositif 19 sur la partie 18 haute de la face 13 latérale du longeron 4, de sorte que les déformations de la caisse 1, et en particulier du pied 14 milieu, s'en trouvent diminuées.

Dès lors, en cas de choc latéral, une partie des efforts selon la direction transversale Y sur le longeron 4 est reportée sur la traverse 3 via le dispositif 19 de raidissement. Or, la traverse 3 est plus rigide vis-à-vis des contraintes dans la direction Y transversale, de par sa direction d'élancement. La déformation du pied 14 milieu s'en trouve diminuée, améliorant la conservation de l'intégrité de la caisse 1.

La sécurité des passagers dans le véhicule est alors améliorée.

Le dispositif 19 de raidissement est simple de conception et peu coûteux à fabriquer.

Le dispositif 19 de raidissement est formé à partir d'une pièce existante, à savoir le support pour l'enrouleur 15 de la ceinture de sécurité, de sorte qu'il ne constitue pas une pièce supplémentaire dans la construction de la caisse 1 du véhicule. Ainsi, de préférence, l'enrouleur 15 est positionné de telle sorte que la traction exercée par la ceinture de sécurité est sensiblement perpendiculaire à la face 5 supérieure de la traverse 3. C'est pourquoi l'inclinaison de la face 5 supérieure de la traverse 3 peut être adaptée dans ce but.

De plus, les déformations du pied 14 milieu vers l'intérieur de la caisse 1 du véhicule sont limitées par l'enrouleur 15 fixé sur le dispositif 19.

En outre, le dispositif 19 présente un encombrement faible, permettant le passage des faisceaux électriques le long du longeron 4.

Enfin, le pied 14 milieu et le longeron 4 peuvent être allégés, c'est-à-dire que la quantité de matière utilisée pour leur fabrication peut être diminuée, réduisant les coûts et allégeant l'ensemble de la caisse 1. En effet, grâce aux reports des contraintes sur la traverse 3 par le dispositif 19 de raidissement, le pied 14 milieu et le longeron 4 n'ont pas besoin d'être raidis en étant surdimensionnés, ce qui permet de diminuer la quantité de matière utilisée.

## Revendications

1. Caisse (**1**) de véhicule automobile comprenant une traverse (**3**) et un longeron (**4**), la caisse (**1**) comprenant en outre un dispositif (**19**) de raidissement, le longeron (**4**) étant en butée contre une portion (**8**) extrême de la traverse (**3**), la traverse (**3**) étant fixée sur un plancher de la caisse (**1**), la caisse étant **caractérisée en ce que** le dispositif (**19**) de raidissement comprend une portion (**20**) supérieure fixée sur le longeron (**4**) et une portion (**21**) inférieure fixée sur la traverse (**3**), la portion (**20**) supérieure et la portion (**21**) inférieure étant reliées l'une à l'autre par une portion (**22**) intermédiaire raidie, la portion (**20**) supérieure du dispositif (**19**) de raidissement comprenant en outre des moyens pour la fixation d'un enrouleur (**15**) d'une ceinture de sécurité.

2. Caisse (**1**) de véhicule selon la revendication 1, **caractérisée en ce que** la portion (**8**) extrême de la traverse (**3**) est en butée contre une partie (**17**) basse du longeron (**4**) et **en ce que** la portion (**20**) supérieure du dispositif (**19**) de raidissement est fixée sur une partie (**18**) haute du longeron (**4**).

3. Caisse (**1**) de véhicule automobile selon la revendication 1 ou la revendication 2, **caractérisée en ce que** la portion (**8**) extrême de la traverse (**3**) est munie d'un plot (**9**) présentant une face (**23**, **44**) supérieure et **en ce que** la portion (**20**) supérieure est fixée sur une face (**13**) latérale du longeron (**4**) et la portion (**21**) inférieure fixée sur la face (**23**, **44**) supérieure du plot (**9**) de la traverse (**3**).

4. Caisse (**1**) de véhicule selon la revendication 3, **caractérisée en ce que** la face (**23**) supérieure du plot (**9**) affleure la face (**13**) latérale du longeron (**4**).

5. Caisse (**1**) de véhicule selon la revendication 4, dans lequel la portion (**22**) intermédiaire du dispositif (**19**) comprend deux sections (**30**, **31**) reliées par un congé (**32**), formant un espace (**40**) libre avec le longeron (**4**) et la face (**23**) supérieure du plot (**9**).

6. Caisse (**1**) de véhicule automobile selon la revendication 5, **caractérisée en ce que** la portion (**22**) intermédiaire du dispositif (**19**) de raidissement comprend des nervures (**33**) s'étendant de la portion (**20**) supérieure vers la portion (**21**) inférieure.

7. Caisse (**1**) de véhicule selon la revendication 3, **caractérisée en ce que** le plot (**9**) comprend une face (**42**) supérieure avant affleurant le longeron (**4**) et une face supérieure (**44**) arrière, parallèle à la face (**42**) supérieure avant, les deux faces (**42**, **44**) supérieures étant reliées par une face (**45**) de jonction à distance du longeron (**4**), la portion (**21**) inférieure du dispositif (**19**) étant fixée sur la face (**44**) supérieure arrière du plot (**9**).

8. Caisse (**1**) de véhicule selon la revendication 7, dans lequel la portion (**22**) intermédiaire du dispositif (**19**) comprend une section (**52**) horizontale s'étendant depuis la portion (**20**) supérieure et reliée à la portion (**21**) inférieure par une section (**53**) de jonction, une pièce (**54**) de renfort étant fixée sur la section (**52**) horizontale.

9. Caisse (**1**) de véhicule automobile selon l'une quelconque des revendications précédentes, **caractérisée en ce qu'**elle comprend un pied (**14**) milieu solidaire du longeron (**4**).

## Patentansprüche

1. Karosserie (1) eines Kraftfahrzeugs, umfassend einen Querträger (3) und einen Längsträger (4), wobei die Karosserie (1) außerdem eine Vorrichtung (19) zur Versteifung umfasst, wobei der Längsträger (4) im Anschlag gegen einen Endabschnitt, (8) des Querträgers (3) ist, wobei der Querträger (3) auf einem Boden der Karosserie (1) befestigt ist, wobei die Karosserie **dadurch gekennzeichnet ist, dass** die Vorrichtung (19) zur Versteifung einen oberen Abschnitt (20) umfasst, der auf dem Längsträger (4) befestigt ist, und einen unteren Abschnitt (20), der auf dem Querträger (3) befestigt ist, wobei der obere Abschnitt (20) und der untere Abschnitt (21) miteinander durch einen versteiften Zwischenabschnitt (22) verbunden sind, wobei der obere Abschnitt (20) der Vorrichtung (19) zur Versteifung außerdem Mittel zur Befestigung eines Straffers eines Sicherheitsgurts (15) umfasst.

2. Karosserie (1) eines Kraftfahrzeugs nach Anspruch 1, **dadurch gekennzeichnet, dass** der Endabschnitt (8) des Querträgers (3) im Anschlag gegen einen unteren Teil (17) des Längsträgers (4) ist, und dadurch, dass der obere Abschnitt (20) der Vorrichtung (19) zur Versteifung auf einem oberen Teil (18) des Längsträgers (4) befestigt ist.

3. Karosserie (1) eines Kraftfahrzeugs nach Anspruch 1 oder Anspruch 2, **dadurch gekennzeichnet, dass** der Endabschnitt (8) des Querträgers (3) mit einem Kontaktstück (9) ausgestattet ist, das eine obere Fläche (23, 44) aufweist, und dadurch, dass der obere Abschnitt (20) auf einer seitlichen Fläche (13) des Längsträgers (4) befestigt ist und der untere Abschnitt (21) auf der oberen Fläche (23, 44) des Kontaktstücks (9) des Querträgers (3) befestigt ist.

4. Karosserie (1) eines Kraftfahrzeugs nach Anspruch 3, **dadurch gekennzeichnet, dass** die obere Fläche (23) des Kontaktstücks (9) mit der seitlichen Fläche (13) des Längsträgers (4) auf gleicher Ebene liegt.

5. Karosserie (1) eines Kraftfahrzeugs nach Anspruch 4, wobei der Zwischenabschnitt (22) der Vorrichtung (19) zwei Strecken (30, 31) umfasst, die durch eine Auskehlung (32) verbunden sind, die einen freien Raum (40) mit dem Längsträger (4) und der oberen Fläche (23) des Kontaktstücks (9) bildet.

6. Karosserie (1) eines Kraftfahrzeugs nach Anspruch 5, **dadurch gekennzeichnet, dass** der Zwischenabschnitt (22) der Vorrichtung (19) zur Versteifung Rippen (33) umfasst, die sich vom oberen Abschnitt (20) hin zum unteren Abschnitt (21) erstrecken.

7. Karosserie (1) eines Kraftfahrzeugs nach Anspruch 3, **dadurch gekennzeichnet, dass** das Kontaktstück (9) eine vordere obere Fläche (42) umfasst, die auf der gleichen Ebene des Längsträgers (4) liegt, und eine hintere obere Fläche (44), parallel zur vorderen oberen Fläche (42), wobei die zwei oberen Flächen (42, 44) durch eine Verbindungsfläche (45) in Abstand vom Längsträger (4) verbunden sind, wobei der untere Abschnitt (21) der Vorrichtung (19) auf der hintern oberen Fläche (44) des Kontaktstücks (9) befestigt ist.

8. Karosserie (1) eines Kraftfahrzeugs nach Anspruch 7, wobei der Zwischenabschnitt (22) der Vorrichtung (19) eine horizontale Strecke (52) umfasst, die sich vom oberen Abschnitt (20) erstreckt und mit dem unteren Abschnitt (21) durch eine Verbindungsstrecke (53) verbunden ist, wobei ein Verstärkungsstück (54) auf der horizontalen Strecke (52) befestigt ist.

9. Karosserie (1) eines Kraftfahrzeugs nach einem der vorhergehenden Ansprüche, **dadurch gekennzeichnet, dass** sie einen mittleren Fuß (14) umfasst, der mit dem Längsträger (4) fest verbunden ist.

## Claims

1. Motor vehicle body (1) comprising a cross member (3) and a longitudinal member (4), the body (1) further comprising a stiffening device (19), the longitudinal member (4) being in abutment against an end portion (8) of the cross member (3), the cross member (3) being fixed to a floor of the body (1), the body being **characterised in that** the stiffening device (19) comprises a top portion (20) fixed to the longitudinal member (4) and a bottom portion (21) fixed to the cross member (3), the top portion (20) and the bottom portion (21) being connected to each other by a stiffened intermediate portion (22), the top portion (20) of the stiffening device (19) further comprising means for fixing a reel (15) of a seat belt.

2. Vehicle body (1) according to claim 1, **characterised in that** the end portion (8) of the cross member (3) is in abutment against a low part (17) of the longitudinal member (4) and **in that** the top portion (20) of the stiffening device (19) is fixed to a high part (18) of the longitudinal member (4).

3. Motor vehicle body (1) according to claim 1 or claim 2, **characterised in that** the end portion (8) of the cross member (3) is provided with a stud (9) having a top face (23, 44) and **in that** the top portion (20) is fixed to a lateral face (13) of the longitudinal member (4) and the bottom portion (21) fixed to the top face (23, 44) of the stud (9) on the cross member (3).

4. Vehicle body (1 ) according to claim 3, **characterised in that** the top face (23) of the stud (9) fits flush with the lateral face (13) of the longitudinal member (4).

5. Vehicle body (1) according to claim 4, in which the intermediate portion (22) of the device (19) comprises two sections (30, 31) connected by a fillet (32), forming a free space (40) with the longitudinal member (4) and the top face (23) of the stud (9).

6. Motor vehicle body (1) according to claim 5, **characterised in that** the intermediate portion (22) of the stiffening device (19) comprises ribs (33) extending from the top portion (20) to the bottom portion (21).

7. Vehicle body (1) according to claim 3, **characterised in that** the stud (9) comprises a front top face (42) fitting flush with the longitudinal member (4) and a rear top face (44), parallel to the front top face (42), the two top faces (42, 44) being connected by a junction face (45) at a distance from the longitudinal member (4), the bottom portion (21) of the device (19) being fixed to the rear top face (44) of the stud (9).

8. Vehicle body (1) according to claim 7, in which the intermediate portion (22) of the device (19) comprises a horizontal section (52) extending from the top portion (20) and connected to the bottom portion (21) by a junction section (53), a reinforcement piece (54) being fixed to the horizontal section (52).

9. Motor vehicle body (1) according to any one of the preceding claims, **characterised in that** it comprises a middle foot (14) secured to the longitudinal member (4).
